# EUROPÄISCHE PATENTSCHRIFT

(11) **EP 1 345 667 B1**
(45) Veröffentlichungstag und Bekanntmachung des Hinweises auf die Patenterteilung: **15.09.2004**
(21) Anmeldenummer: 01986927.0
(22) Anmeldetag: 21.12.2001
(51) Int. Cl.: B01D 25/26, B01D 63/08

(54) **MODUL ZUM BEHANDELN VON FLUIDEN UND VERFAHREN ZUR HERSTELLUNG SOLCHER MODULE**
MODULE FOR TREATING FLUIDS AND A METHOD FOR PRODUCING A MODULE OF THIS TYPE
MODULE POUR TRAITER DES FLUIDES, ET PROCEDE DE FABRICATION D'UN TEL MODULE

(30) Priorität: 29.12.2000 DE 10065258
(43) Veröffentlichungstag der Anmeldung: 24.09.2003
(73) Patentinhaber: Pall Corporation, East Hills, New York 11548 (US)
(72) Erfinder: DIEMER, Wolfgang, 73550 Waldstetten (DE); FIGGLE, Klaus, 73776 Altbach (DE); FEIFEL, Klaus, 73529 Schwäbisch Gmünd (DE)
(74) Vertreter: Wössner, Gottfried, Dr. Dipl.-Chem.
(86) Internationale Anmeldenummer: PCT/EP2001/015195
(87) Internationale Veröffentlichungsnummer: WO 2002/053257

(56) Entgegenhaltungen:
- DE-C- 740 455
- US-A- 4 647 415
- US-A- 4 871 456
- US-A- 6 022 477

## Beschreibung

Die Erfindung betrifft ein Modul zum Behandeln von Fluiden mit einer oder mehreren aufeinander gestapelten Zellen, die jeweils mindestens eine Öffnung aufweisen, wobei die Öffnung der Zelle oder die gleichartigen Öffnungen der Zellen zusammen mindestens einen Kanal für die Zuführung des zu behandelnden Fluids bilden und wobei jede Zelle zwei einen Innenraum begrenzende poröse, flächige Bauteile aufweist, wobei der oder die Innenräume mit dem Kanal verbunden ist/sind. Die Erfindung bezieht sich auch auf ein Verfahren zur Herstellung solcher Module gemäß des Oberbegriffs des Patentanspruchs 12.

Im Bereich der Filtrationstechnik ist es bekannt, Filterkerzen mit Füllungen zu verwenden, die entweder angeschwemmt oder trocken eingebracht werden.

Aus der DE 39 432 49 A1 ist eine solche Filtervorrichtung bekannt, die ein perforiertes Kernrohr, einen perforierten Stützmantel, eine vollständig geschlossene, ein Führungselement tragende obere Verschlußkappe und eine untere Verschlußkappe aufweist, die eine zentrale Öffnung besitzt, an die sich ein Anschlußstutzen anschließt. Der zwischen dem Kernrohr, dem Stützmantel und den beiden Verschlußkappen gebildete Hohlraum wird mit Schüttgut aus regenerierbaren filtrationsaktiven Stoffen befüllt. Die zu filtrierende Flüssigkeit strömt in radialer Richtung von außen nach innen und das Filtrat wird durch das Kernrohr abgeführt.

Der Nachteil dieser Vorrichtung besteht darin, daß die Befüllung bereits beim Kerzenhersteller erfolgen muß, weil bei Anbringung der oberen Verschlußkappe die gefüllte Kammer geschlossen wird. Dies bedeutet, daß der Anwender bei Bestellung der Filterkerze die Art des Füllmaterials bereits angeben muß. Ein weiterer Nachteil besteht darin, daß sich bei längerer Lagerung oder beim Transport die Füllung absetzen kann, so daß ein Freiraum entsteht, durch den das Unfiltrat durch die Kerze strömt.

Die DE 38 02 816 A1 beschreibt ein kerzenförmiges Filterelement, bei dem die äußere Umfangswand als poröse Stützschicht für einen Filterkuchen ausgebildet ist. Dieser Filterkuchen wird durch Anschwemmen von Filtermaterial, beispielsweise Kieselgur oder Fasermischungen und Adsorbentien wie Aktivkohle, Kieselsäure und dergleichen gebildet. Nach Verbrauch des Filterkuchens wird dieser durch Rückspülung abgeschwemmt und durch einen neu anzuschwemmenden Filterkuchen ersetzt, wobei das Anschwemmfiltermaterial des entfernten Filterkuchens außerhalb des Filtergehäuses auf umständliche Weise regeneriert werden muß. Es ist auf jeden Fall notwendig, vor der Fortsetzung des Filtrationsvorgangs einen neuen Filterkuchen anzuschwemmen. Diese Filtervorrichtung hat den Nachteil, daß nur anschwemmfähige Materialien eingesetzt werden können.

Die DE 3204022 C2 beschreibt eine Filterpatrone, die eine höhere Stabilität und einen besseren Wirkungsgrad aufweisen soll. Die Patrone besitzt einen koaxialen Aufbau und ist mit filtrationsaktivem Material gefüllt, das auf Grund der Ausbildung der Wände mit durchlässigen und undurchlässigen Abschnitten im wesentlichen in axialer Richtung durchströmt wird.

Ferner ist es in der Filtrationstechnik bekannt, Filtermodule mit einer Anzahl von Filterzellen zu verwenden, die aufeinander gestapelt sind und jeweils eine zentrale Öffnung aufweisen.

Aufbau- und Betriebsweise dieser Filtermodule ist unterschiedlich.

Eine Variante dieser bekannten Filtermodule sieht ein zentrales Stützrohr vor, auf dem die vorgefertigten Filterzellen zwischen zwei an den Enden angebrachten Adaptern aufgereiht werden. Beim Zusammenbau des Filtermoduls werden die Filterzellen zusammengedrückt und gegeneinander abgedichtet gehalten. Ein solches Filtermodul wird beispielsweise in der DE 3741552 A1 beschrieben, wobei vorgefertige Filterzellen verwendet werden.

Eine andere Variante bekannter Filtermodule kommt ohne Stützrohr aus, wobei die Filterzellen an ihrem inneren Umfang an der zentralen Öffnung mit Halte- und Verbindungsringen versehen sind, die beim Aufeinanderstapeln der Filterzellen miteinander verschweißt werden, um auf diese Weise das Filtermodul zu einer festen Einheit zusammenzufügen. Andere Ausführungen sehen Distanz- und/oder Drainageelemente vor, die als scheibenförmige Elemente zwischen den Filterschichten und/oder Filterzellen angeordnet sind und eine mechanische Verbindung untereinander ermöglichen.

Trotz unterschiedlicher Bauformen der Filtermodule ist den Filterzellen gemeinsam, daß die Filterlagen aus ebenen Materialien, wie zum Beispiel Filterkartons, Papieren, Fliesen oder Geweben hergestellt werden.

Als Filterlagen werden im großen Umfang sogenannte Filterschichten eingesetzt. Unter diesem Begriff wird ein Tiefenfiltermaterial verstanden, das organische und/oder anorganische fasrige und/oder körnige Stoffe aufweist.

Als Basismaterial für diese Filterschichten werden in der Regel Zellulose- und/oder Kunststoffasern verwendet, in die filtrationsaktive Substanzen, wie zum Beispiel Kieselgur oder Perlite eingelagert sein können. Kieselgur und Perlite dienen hierbei zur Vergrößerung der inneren Oberfläche und damit zur Vergrößerung des Trubaufnahmevermögens.

Der Einsatzbereich der Filterschichten reicht von der Klärung und Behandlung von Flüssigkeiten der gesamten Getränkeindustrie bis in den Pharmabereich und die chemische Industrie. Filterschichten weisen nicht nur eine Siebwirkung auf, mit der grobe Teilchen auf der Oberfläche der Filterschicht zurückgehalten werden, sondern insbesondere auch eine Tiefenwirkung für feine Teilchen, die in den Hohlräumen innerhalb des Tiefenfiltermaterials zurückgehalten werden. Je nach Art der verwendeten Materialien können diese Filterschichten z.B. auch eine Adsorptionswirkung aufweisen oder auf andere, über die rein mechanische Filtrationswirkung hinausgehende Weise mit dem Unfiltrat in Wechselwirkung treten. Weiterhin kann für bestimmte Anwendungszwecke die Oberfläche nachbehandelt sein, damit sich im trockenen und feuchten Zustand keine fasrigen Teilchen ablösen können.

Die Zusammensetzung der Filterschichten richtete sich bisher immer nach dem Filtrationszweck. Dies bedeutet, daß bei der Herstellung der Filterschichten der spätere Anwendungsbereich bereits definiert werden mußte.

Da eine entsprechende Umstellung des Herstellungsverfahrens der Filterschichten nicht problemlos ist und hierbei auch immer Mindestmengen hergestellt werden müssen, sind kleine Chargen speziell angepasster Filterschichten relativ teuer.

Die Filtermodule können auf zwei Weisen betrieben werden.

Aus der EP 0 233 999 A2 ist ein Filtermodul bekannt, bei dem Filterzellen und Stützkörper abwechselnd entlang eines Zentralrohres aufeinander gestapelt sind. In der Filterzellen befinden sich ebenfalls Stützstrukturen, die das Filtermaterial der Filterzellen abstützen. Das Unfiltrat wird von außen an die Filterzellen geführt und das Filtrat wird über das Innere der Filterzellen und über das Zentralrohr abgeführt. Nachteilig ist hierbei, daß zum Einen die Stützkörper einen gleichmäßigen Zutritt des Unfiltrats an die Filterzellen verhindern, andererseits die Filterstoffe an die Stützkörper zwischen den Filterzellen an den gesamten Innenraum des Modulfilters angelagert werden.

Um hier Abhilfe zu schaffen, wurde in der DE 198 57 751 A1 vorgeschlagen, das Unfiltrat durch den zentralen Kanal den Filterzellen zuzuführen. Diese innen angeströmten Filterzellen erfordern entsprechende Stützkörper zwischen den Filterzellen, um ein Aufblähen der Filterschichten während der Filtration zu verhindern. Derart ausgestaltete und betriebene Filtermodule werden auch als Invers-Module bezeichnet.

Aufgabe der Erfindung ist es, ein Modul zu schaffen, das beim Anwender eine individuelle Anpassung an die jeweilige Aufgabe bezüglich der Behandlung von Fluiden ermöglicht, wobei Gehäuse und Anschlüsse bereits bestehender Filtrationsvorrichtungen ohne Änderung verwendet werden sollen.

Die Aufgabe wird dadurch gelöst, daß der Innenraum der Zelle oder Zellen mindestens teilweise Behandlungsmaterial enthält.

Unter Zellen werden im Rahmen der Erfindung alle Bauarten von Filterzellen verstanden, wobei diese Zellen nicht nur für die Filtration eingesetzt werden, weil das in die Zellen eingebrachte Behandlungsmaterial nicht auf filtrationsaktive Materialien beschränkt ist, sondern auch andere Substanzen, wie zum Beispiel Extraktoren umfassen kann.

Der Anwendungszweck des Moduls wird dadurch über die Filtration hinaus erweitert.

Der Vorteil des erfindungsgemäßen Moduls besteht darin, daß der Anwendungsbereich des Moduls bei der Herstellung noch nicht festliegen muß, weil die Festlegung erst durch die Wahl des Behandlungsmaterials erfolgt. Dies eröffnet die Möglichkeit, die Zellen aus neutralen porösen Bauteilen herzustellen, die keine speziellen Zusätze enthalten. Es reicht deshalb aus, z.B. Filterschichten aus den bekannten Grundstoffen, das heißt im wesentlichen aus Zellulose- und/oder Kunststoffasern herzustellen. Die Fertigungskosten der Filtermodule werden dadurch erheblich gesenkt, weil nur wenige Typen von porösen Bauteilen wie z.B. Filterschichten in großen Chargen hergestellt werden müssen und die Festlegung auf den Anwendungszweck erst später durch die Wahl des Behandlungsmaterials erfolgt. Die Erfindung ist jedoch nicht auf diese sogenannten neutralen Bauteile beschränkt.

Der Anwender wird in die Lage versetzt, die Befüllung des Moduls auch vor Ort selbst vorzunehmen, was insbesondere bei toxischen und teuren Materialien von Vorteil ist. Außerdem kann er eigenes Material einbringen, über das er möglicherweise eigenes Know How besitzt. Empfindliche Materialien, deren Wirksamkeit möglicherweise während des Transports vom Modulhersteller bis zum Anwender und durch eine mögliche Zwischenlagerung in ihrer Wirksamkeit beeinträchtigt werden können, können vor Ort kurz vor dem Einsatz des Moduls eingebracht werden. Die Haltbarkeit einer Befüllung stellt dann kein Problem mehr dar.

Da sich die erfindungsgemäße Weiterentwicklung der Module auf die Befüllung der Zellen in Verbindung mit den porösen Bauteilen bezieht, müssen die Abmessungen des Moduls nicht verändert werden, so daß bestehende Filtergehäuse und Anschlüsse verwendet werden können.

Das Behandlungsmaterial kann pulverförmig, granulatförmig, faserförmig und/oder gelartig sein.

Als poröse flächige Bauteile können außer Filterschichten auch Membrane, wie Kunststoff- oder Metallmembrane, Gewebe oder Vliese zum Einsatz kommen.

Als Behandlungsmaterialien kommen vorzugsweise filtrationsaktive Materialien in Frage. Hierzu zählen alle bekannten Substanzen, wie zum Beispiel Perlite, Kieselgure, fasrige Materialien, aber auch Adsorbentien wie Aktivkohle, PVPP, PVPP-Jod-Substanzen.

Es hat sich gezeigt, daß der Wirkungsgrad beispielsweise von Aktivkohle oder PVPP deutlich größer ist als bei Filterschichten, in die diese Materialien bei der Herstellung in die Filterschicht bereits eingelagert worden sind, weil die aktiven Oberflächen durch die Einbindung in die Filterschicht beeinträchtigt werden. Es wird dadurch beim erfindungsgemäßen Modul weniger filtrationsaktives Material bei gleicher Leistung und Wirksamkeit benötigt. Dies ist insbesondere bei teuren Materialien ein großer Vorteil.

Bezüglich der Adsorbentien können nunmehr auch empfindliche Materialien eingesetzt werden. So können Adsorbentien in das Filtermodul eingebracht werden, die bei der Herstellung von Filterschichten auf Grund des Fertigungsprozesses inaktiv werden würden. Die Herstellung der Filterschichten basiert nämlich auf einer wäßrigen Maische, die in einem Ofen getrocknet werden muß. Bei diesem Herstellungsvorgang würden wasserempfindliche oder hitzeempfindliche Adsorbentien bereits bei der Herstellung wirkungslos werden. Es ist dadurch möglich, vollkommen neue Anwendungsgebiete für ein solches Modul zu erschließen.

Als Behandlungsmaterialien kommen auch Extraktoren in Frage, wie zum Beispiel Materialien pflanzlichen Ursprungs, die Wirkstoffe abgeben und auf diese Weise der zu behandelnden Flüssigkeit bestimmte Inhaltsstoffe oder Eigenschaften verleihen. Es ist auch möglich, eine Filtration mit einer Zudosierung von Wirkstoffen zu verbinden, wobei auch bereits voreingestellte poröse Bauteile zum Einsatz kommen können und die Zudosierung über das Behandlungsmaterial erfolgen kann.

Vorzugsweise enthält der Innenraum trockenes Behandlungsmaterial, was den Vorteil hat, daß insbesondere feuchtigkeitsempfindliche Materialien zum Einsatz kommen können.

Das Behandlungsmaterial wird vorzugsweise auf der Innenseite der porösen Bauteile aufgebracht. Der Füllgrad für die jeweilige Anwendung kann über die Materialmenge unter Berücksichtigung der vorhandenen Zellenvolumina festgelegt werden.

Der Innenraum der Zellen kann gemäß einer weiteren Ausführungsform mit einem Material versehen sein, in den das Behandlungsmaterial eingelagert ist oder an dem das Behandlungsmaterial haftet. Es wird vorzugsweise ein Vlies oder eine poröse Folie mit haftenden Oberflächen verwendet. Dadurch wird es möglich, insbesondere Adsorbentien in der Zelle gleichmäßig zu verteilen, wodurch die Wirksamkeit der Materialien noch weiter erhöht wird. Sollte ein Transport der bereits befüllten Filtermodule notwendig werden, besteht nicht die Gefahr, daß sich das Behandlungsmaterial dadurch ungleichmäßig im Innenraum der Zellen verteilt.

Vorzugsweise weisen die pulver- oder granulatförmigen Behandlungsmaterialien eine Korngröße von 0,01 mm bis 10 mm auf. Es hat sich überraschend gezeigt, daß Filterschichten für derartige pulver- bzw. granulatförmige Materialien eine optimale Struktur aufweisen, die nicht zu einer Verblockung führt. Es werden dadurch deutlich längere Standzeiten erzielt.

Das Verfahren zur Herstellung eines solchen Moduls sieht vor, daß die Zellen entweder vorgefertigt und dann zu einem Modul zusammengesetzt werden oder die Zellen beim Zusammenbau des Moduls gebildet werden und daß ein Behandlungsmaterial mit einem Trägerfluid durch den für die Fluidzufuhr vorgesehenen Kanal in die Zellen eingebracht wird.

Hierbei wird die Tatsache ausgenutzt, daß der Innenraum der Zellen über den Kanal von außen zugänglich ist, ohne daß zur Befüllung Umbaumaßnahmen am Modul vorgenommen werden müssen.

Als Trägerfluid kommen Gase oder Flüssigkeiten in Frage, was sich nach der Art des Behandlungsmaterials richtet. Wenn es sich um feuchtigkeitsempfindliche Behandlungsmaterialien handelt, wird man ein Gas wählen und umgekehrt.

Vorzugsweise wird als Trägergas Luft verwendet, es können aber auch andere Trägergase, wie zum Beispiel Inertgase zur Anwendung kommen, wenn es sich um besonders empfindliche Behandlungsmaterialien handelt, die mit Sauerstoff wechselwirken.

Vorzugsweise wird das Behandlungsmaterial durch ein Druckgefälle, z. B. mit einem Druckgasstoß, in die Zelle oder Zellen eingebracht. Es hat sich gezeigt, daß sich bei Anwendung eines Druckgasstoßes eine gleichmäßige Verteilung der Behandlungsmaterialien in allen Zellen einstellt.

Andere bevorzugte Verfahren, das Behandlungsmaterial einzubringen, sind mechanischer Art, wie z.B. Rütteln, Vibrationen oder Stopfen, wobei diese Verfahren auch mit Fluidunterstützung durchgeführt werden können.

## Patentansprüche

1. Modul zum Behandeln von Fluiden mit einer oder mehreren aufeinander gestapelten Zellen, die jeweils mindestens eine Öffnung aufweisen, wobei die Öffnung der Zelle oder die gleichartigen Öffnungen der Zellen zusammen mindestens einen Kanal für die Zuführung oder Abführung des zu behandelnden Fluids bilden und wobei jede Zelle zwei einen Innenraum begrenzende, poröse flächige vom Fluid durchströmbare Bauteile aufweist, wobei der oder die Innenräume mit dem Kanal verbunden ist/sind, **dadurch gekennzeichnet,**
**daß** der Innenraum der Zelle oder Zellen mindestens teilweise ein Behandlungsmaterial für das Fluid enthält.

2. Modul nach Anspruch 1, **dadurch gekennzeichnet, daß** der Innenraum trockenes Behandlungsmaterial erhält.

3. Modul nach Anspruch 1 oder 2, **dadurch gekennzeichnet, daß** das Behandlungsmaterial pulverförmig, granulatförmig, faserförmig und/oder gelartig ist.

4. Modul nach einem der Ansprüche 1 bis 3, **dadurch gekennzeichnet, daß** die porösen flächigen Bauteile aus Filterschichten bestehen.

5. Modul nach einem der Ansprüche 1 bis 3, **dadurch gekennzeichnet, daß** die porösen flächigen Bauteile aus Membranen, wie Kunststoff- oder Metallmembranen, Gewebe oder Vliesen bestehen.

6. Modul nach einem der Ansprüche 1 bis 5, **dadurch gekennzeichnet, daß** das Behandlungsmaterial auf der Innenseite der porösen Bauteile aufgebracht ist.

7. Modul nach einem der Ansprüche 1 bis 6, **dadurch gekennzeichnet, daß** im Innenraum der Zellen ein Material angeordnet ist, in dem das Behandlungsmaterial eingelagert ist oder an dem das Behandlungsmaterial haftet.

8. Modul nach einem der Ansprüche 1 bis 7, **dadurch gekennzeichnet, daß** die Behandlungsmaterialien eine Korngröße von 0,01 mm bis 10 mm aufweisen.

9. Modul nach einem der Ansprüche 1 bis 8, **dadurch gekennzeichnet, daß** das Behandlungsmaterial mindestens ein filtrationsaktives Material umfaßt.

10. Modul nach einem der Ansprüche 1 bis 9, **dadurch gekennzeichnet, daß** das Behandlungsmaterial mindestens ein Extraktormaterial umfaßt.

11. Modul nach einem der Ansprüche 1 bis 10, **dadurch gekennzeichnet, daß** die porösen flächigen Bauteile frei von filtrationsaktiven Substanzen sind.

12. Verfahren zur Herstellung eines Moduls nach einem der Ansprüche 1 bis 11, bei dem die Zellen vorgefertigt und zu einem Modul zusammengesetzt werden oder die Zellen beim Zusammenbau des Moduls gebildet werden, **dadurch gekennzeichnet,**
**daß** ein Behandlungsmaterial mit einem Trägerfluid durch den für die Fluidzufuhr vorgesehenen Kanal in die Zellen eingebracht wird.

13. Verfahren nach Anspruch 12, **dadurch gekennzeichnet, daß** das Behandlungsmaterial durch ein Druckgefälle in die Zellen eingebracht wird.

14. Verfahren nach einem der Ansprüche 12 oder 13, **dadurch gekennzeichnet, daß** das Behandlungsmaterial mechanisch in die Zellen eingebracht wird.

15. Verfahren nach Anspruch 14, **dadurch gekennzeichnet, daß** das Behandlungsmaterial durch Rütteln, Vibrationen oder Stopfen eingebracht wird.

16. Verfahren nach einem der Ansprüche 14 oder 15, **dadurch gekennzeichnet, daß** das Einbringen des Behandlungsmaterials mit Fluidunterstützung durchgeführt wird.

## Revendications

1. Module pour le traitement de fluides, comportant une ou plusieurs cellules empilées les unes sur les autres qui présentent chacune au moins une ouverture, l'ouverture de la cellule ou les ouvertures de même type des cellules formant conjointement au moins un canal pour l'alimentation ou l'évacuation du fluide à traiter, et chaque cellule comprenant deux composants poreux, bidimensionnels, susceptibles d'être traversés par le fluide et délimitant une chambre intérieure, la ou les chambres intérieures étant reliée(s) au canal, **caractérisé en ce que** :
la chambre intérieure de la cellule ou des cellules contient au moins partiellement un matériau de traitement pour le fluide.

2. Module selon la revendication 1, **caractérisé en ce que** la chambre intérieure contient du matériau sec de traitement.

3. Module selon l'une ou l'autre des revendications 1 et 2, **caractérisé en ce que** le matériau de traitement se présente sous forme de poudre, de granulés, de fibres et/ou de gel.

4. Module selon l'une des revendications 1 à 3, **caractérisé en ce que** les composants poreux bidimensionnels sont constitués par des couches filtrantes.

5. Module selon l'une des revendications 1 à 3, **caractérisé en ce que** les composants poreux bidimensionnels sont constitués par des membranes, telles que des membranes de matière plastique ou de métal, par des tissus ou des nappes.

6. Module selon l'une des revendications 1 à 5, **caractérisé en ce que** le matériau de traitement est déposé sur le côté intérieur des composants poreux.

7. Module selon l'une des revendications 1 à 6, **caractérisé en ce que** dans la chambre intérieure des cellules est agencé un matériau dans lequel est intégré le matériau de traitement ou sur lequel adhère le matériau de traitement.

8. Module selon l'une des revendications 1 à 7, **caractérisé en ce que** les matériaux de traitement présentent une taille granulométrique de 0,01 mm à 10 mm.

9. Module selon l'une des revendications 1 à 8, **caractérisé en ce que** le matériau de traitement comprend au moins un matériau actif en filtration.

10. Module selon l'une des revendications 1 à 9, **caractérisé en ce que** le matériau de traitement comprend au moins un matériau extracteur.

11. Module selon l'une des revendications 1 à 10, **caractérisé en ce que** les composants poreux bidimensionnels sont exempts de substances actives en filtration.

12. Procédé pour fabriquer un module selon l'une des revendications 1 à 11, dans lequel les cellules sont préfabriquées et regroupées en un module ou les cellules sont formées pendant l'assemblage du module, **caractérisé en ce qu'**un matériau de traitement est introduit dans les cellules au moyen d'un fluide porteur à travers le canal prévu pour l'alimentation en fluide.

13. Procédé selon la revendication 12, **caractérisé en ce que** le matériau de traitement est introduit dans les cellules par un gradient de pression.

14. Procédé selon l'une ou l'autre des revendications 12 et 13, **caractérisé en ce que** le matériau de traitement est introduit mécaniquement dans les cellules.

15. Procédé selon la revendication 14, **caractérisé en ce que** le matériau de traitement est introduit par agitation, par des vibrations ou par bourrage.

16. Procédé selon l'une ou l'autre des revendications 14 et 15, **caractérisé en ce que** l'introduction du matériau de traitement s'effectue sous l'assistance d'un fluide.

## Claims

1. Module for treating fluids with one or more cells stacked one on top of the other, each of these having at least one opening, the opening of the cell or the similar openings of the cells together forming at least one channel for feeding or discharging the fluid to be treated, each cell having two sheet-type, porous components delimiting an inner space and designed for passage of the fluid therethrough, the inner space or spaces being connected to the channel, **characterized in that** the inner space of the cell or cells at least partially contains a treatment material for the fluid.

2. Module in accordance with Claim 1, **characterized in that** the inner space contains dry treatment material.

3. Module in accordance with Claim 1 or 2, **characterized in that** the treatment material is powdery, granular, fibrous and/or gel-like.

4. Module in accordance with any one of Claims 1 to 3, **characterized in that** the sheet-type porous components consist of filter layers.

5. Module in accordance with any one of Claims 1 to 3, **characterized in that** the sheet-type porous components consist of membranes such as plastic or metal membranes, woven or non-woven fabrics.

6. Module in accordance with any one of Claims 1 to 5, **characterized in that** the treatment material is applied to the inner side of the porous components.

7. Module in accordance with any one of Claims 1 to 6, **characterized in that** a material having the treatment material embedded therein or the treatment material adhered thereto is arranged in the inner space of the cells.

8. Module in accordance with any one of Claims 1 to 7, **characterized in that** the treatment materials have a grain size of from 0.01 mm to 10 mm.

9. Module in accordance with any one of Claims 1 to 8, **characterized in that** the treatment material comprises at least one filtration-active material.

10. Module in accordance with any one of Claims 1 to 9, **characterized in that** the treatment material comprises at least one extractor material.

11. Module in accordance with any one of Claims 1 to 10, **characterized in that** the sheet-type porous components are free from filtration-active substances.

12. Method for manufacturing a module in accordance with any one of Claims 1 to 11, wherein the cells are prefabricated and assembled into a module or the cells are formed with assembly of the module, **characterized in that** a treatment material is introduced with a carrier fluid into the cells through the channel provided for feeding the fluid.

13. Method in accordance with Claim 12, **characterized in that** the treatment material is introduced into the cells by a pressure gradient.

14. Method in accordance with Claim 12 or 13, **characterized in that** the treatment material is introduced into the cells mechanically.

15. Method in accordance with Claim 14, **characterized in that** the treatment material is introduced by shaking, vibrations or stuffing.

16. Method in accordance with Claim 14 or 15, **characterized in that** the introduction of the treatment material is performed with fluid support.
